# EUROPEAN PATENT SPECIFICATION

(11) **EP 3 641 538 B1**
(45) Date of publication and mention of the grant of the patent: **03.07.2024**
(21) Application number: 18820020.8
(22) Date of filing: 22.06.2018
(51) Int. Cl.: A01M 13/00, B05B 7/16, B05B 7/00, B05B 7/24, B05B 7/26, A23L 3/3409

(54) **A VAPORISING APPARATUS**
VERDAMPFUNGSVORRICHTUNG
APPAREIL DE VAPORISATION

(30) Priority: 23.06.2017 AU 2017902430
(43) Date of publication of application: 29.04.2020
(73) Proprietor: Universal Biosecurity Limited, Cottesloe, Western Australia 6011 (AU)
(72) Inventor: NEWMAN, James Patrick, Cottesloe Western Australia 6011 (AU); REN, Yong Lin, Cottesloe Western Australia 6011 (AU)
(74) Representative: Potter Clarkson
(86) International application number: PCT/AU2018/050631
(87) International publication number: WO 2018/232468

(56) References cited:
- WO-A1-03/061384
- WO-A1-2016/197202
- US-A- 2 944 029
- US-A- 3 646 701
- US-A- 4 228 124
- US-A- 4 568 820
- US-A- 5 367 603
- US-A1- 2015 013 562
- US-B2- 6 974 126
- US-B2- 6 974 126

## Description

### Technical Field

The present disclosure relates to an apparatus for vaporising a chemical agent and delivering the chemical agent as a fumigant to an area requiring treatment by fumigation.

### Background

Fumigants are volatile chemicals or poisonous gases which are typically generated from liquid and/or solid agents. They possess bactericidal, fungicidal, insecticidal and/or nematicidal properties and are used to disinfest or kill and control pests, pathogens and weeds. Fumigation is the art of dispensing and applying gaseous substances into an enclosure especially for the purpose of disinfesting, controlling or eliminating undesirable organisms.

Fumigants are active in the gaseous state and can penetrate into free air space in and around produce and into cracks and crevices in the storage structure and enclosure in toxic concentrations, killing target organisms and their breeding stages. Fumigants are widely used for insect, rodent and fungus control or disinfestation of stored products, food, cut flowers, timber, buildings and soils because they are not only generally effective but also relatively cheap.

Foodstuffs such as fruit and grains are particularly susceptible to infestation by invertebrates. Some economic regions, such as Australia, have a 'nil tolerance' for live insects in exports to protect the reputation of their local produce. These regions typically adopt extensive fumigation practices to mitigate infestation risk. Equipment and facilities can also experience infestation and may also be treated by fumigation to control these pests. Similarly, buildings, ship vessels, containers, fruit trees, timber and soil may require treatment by fumigation to control various pathogens and pests.

There are a multitude of chemical agents which can be used as a fumigant for fumigation purposes, including hydrogen cyanide, calcium cyanide, carbon dioxide, sulphur dioxide, carbon tetrachloride, ethylene dichloride, ethyl formate, ethylene bromide, p-dichlorobenzene, 1,3-dichloropropene, chloropicrin, formaldehyde, methyl isocyanate, phosphine, methyl bromide and sulfuryl fluoride. Each of these agents have certain advantages and disadvantages, including hazards from toxicity and flammability.

Methyl bromide and phosphine are two chemical agents commonly used in fumigation control or prevention of invertebrate infestations. Methyl bromide is a broad spectrum pesticide having non-specific toxicity to a wide range of invertebrates. However, methyl bromide can have deleterious effects on humans and other animals if they are exposed to high concentrations. Methyl bromide has a further disadvantage in that it is now widely accepted to be a known and significant ozone depleting substance. Artificial addition of methyl bromide to the atmosphere via fumigation contributes to thinning of the ozone layer, the detrimental effects of which are well known and documented. Nevertheless, methyl bromide remains a preferred fumigant for many quarantine authorities.

Phosphine is often relied on for fumigation of gram and other similar commodities and is effective if used properly. However, due to improper application and excessive reliance, there are increasing reports of phosphine resistance. Some regions, who have almost total reliance on this single fumigant through the value chain,have been placed in a dangerous position with respect to development of phosphine resistance and have required implementation of phosphine resistance monitoring and management programs.

Ethyl formate is an agent having properties that indicate usefulness as a fumigant, particularly in controlling invertebrates. Ethyl formate vapour has been shown to be toxic to insects common to infestation of stored commodities. Ethyl formate is a naturally occurring compound, found in various foods, which rapidly breaks down into harmless and naturally occurring compounds. Despite it being able to be absorbed into the body by inhalation of its vapour and by ingestion, skin and/or eye contact, ethyl formate has relatively low human toxicity. These features indicate suitability for treatment of food commodities.

Ethyl formate is liquid at normal ambient temperatures and has a boiling point of 54°C, however is highly flammable with 2.8% (v/v) or 92g/m-³ of lower explosive limit (LEL). This poses a significant problem in practical use of ethyl formate as a fumigant as it is necessary to avoid conditions that can ignite a flame. Other fumigantsuseful in control of invertebrates, such as ethylene dichloride and propylene oxide, also have similar flammability concerns with their use as a fumigant.

Fumigation is inherently a hazardous operation since chemical agents used in fumigation are typically toxic to most forms of life, in some cases, including humans. Use of agents that are flammable increases the level of hazard, since in order to apply liquid agents as a fumigant, the agent must be converted from liquid to gas, typically by a vaporiser which requires some application of heat. It is not desirable to apply a liquid agent without vaporisation since levels of non-vaporised agent can pose occupational health and safety concerns and/or cause damage to goods being treated with the agent.

Application of flammable agents as a fumigant thus requires careful operation to mitigate risk of ignition. It is known to mix liquid agent and non-flammable gas in cylinders to form a non-flammable formulation under high pressure. However, the practice of using gas in cylinders has at least the disadvantage of potential carburettor icing phenomenon, particularly in cold or humid environments. This effect can increase application time significantly as the gas cylinder and regulator becomes frozen. Furthermore, if pressurised fumigant agents are used, well trained fumigant operators, appropriately trained in handling of high pressure cylinders, must be employed to apply the fumigant.

It is also known to create a substantially non-flammable fumigant agent at high pressure by combining liquid fumigant with carbon dioxide. Carbon dioxide is provided in sufficient quantity to render the flammable liquid as non-flammable. However, these mixtures have all the limitations associated with use of pressurised canisters, as well as the additional limitations of undesirable degradation or corrosion of some materials by the carbon dioxide, emissions of greenhouse gas and phytotoxicity to fresh fruit and vegetables. These difficulties limits the scope of use of such mixtures.

Existing vaporiser designs can demonstrate variability in heating of the liquid agent, resulting in incomplete or partial vaporisation of the agent. This can result in inefficient and ineffective application of the agent, including non-homogenous distribution of agent throughout a treatment area and/or damage to goods due to settling of unvaporised agent. Known vaporiser designs are also typically limited to a single batch or limited volume of liquid agent in a chamber. The chamber must be refilled with liquid agent before further applications can be undertaken, typically requiring stopping of operation as well as allowing a cooling period between applications. Thereis therefore a need for improvements in fumigation technology, to expand the range of agents that can be used safely and effectively in fumigation and to mitigate various operational inefficiencies and safety hazards.

US 6,974,126 discloses an apparatus and method for mixing a gas and a liquid to produce a gaseous vapor of the liquid that is substantially free of droplets. Gas, e.g. carbon dioxide, is divided into first and second streams. The first stream is combined in an atomization zone with the liquid, e.g. acetic acid, to form an atomized mixture of the gas and liquid. This atomized mixture is then contacted with the second gas stream in a mixing zone within a mixing/separation chamber in which the second gas stream vaporizes substantially allow of the atomized liquid, and the resulting mixture of gas, vaporized liquid and residual droplets moves to the separation zone of the mixing/separation chamber. In the separation zone, the residual droplets gravitationally separate from the vaporized mixture, and the vaporized mixture free of a substantial amount of residual droplets is removed from the chamber. US 4,568,820 discloses a smoke generator and system for its employment wherein a smoke is generated from a liquid smoke producing agent when the liquid is vaporized by pressurized 1000°F. air which has been heated in an electrical resistance coil. The systematic application requires modular use of the electrical resistance coils through an area to provide smoke from a variety of origins in accordance with the control exercised from a centrally located control panel. The smoke producing agent, the pressurized air, and the electrical current are supplied to each module via said control panel. US 2015/013562 A1 discloses a method of controlling a smoke generator. The smoke generator is adapted to be connected to a supply of a pressurized gas and a supply of a smoke fluid and further comprises a valve to regulate the pressure of the gas, a fluid driving means, a mixing unit for mixing the smoke fluid and the gas, and a heat exchanger heating the mixture of the pressurized gas and the smoke fluid to vaporize the smoke fluid and form a smoke upon ejection into surrounding air. The control method comprises steps of receiving a smoke density parameter indicative of a desired amount of smoke to be generated by the smore generator, measuring a gas pressure at a position between the valve and the heat exchanger, and using the parameters in controlling the valve. US 3,646,701 discloses a portable thermal insecticide fogger including an internal combustion engine for generating hot exhaust gases that discharge from an outlet, a supply of liquid insecticide, and a diaphragm pump operated off the changing pressures of the internal combustion engine for pumping the liquid insecticide to a location upstream of the outlet for admixture and common discharge with the exhaust gases.

Any discussion of documents, acts, materials, devices, articles or the like which has been included in the present specification is not to be taken as an admission that any or all of these matters form part of the prior art base or were common general knowledge in the field relevant to the present disclosure as it existed before the priority date of each claim of this application.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

### Summary

With the above in mind, according to a first aspect of the present disclosure, there is provided a vaporising apparatus according to Claim 1.

Advantageously, the hot gas and chemical agent streams are flowed from respective sources and are mixed to provide a substantially non-flammable fumigant agent.

In one embodiment, the gas stream and chemical agent stream originate from a source external to the vaporising apparatus. Gas and chemical agent are drawn into and/or directed to components of the vaporising apparatus by suitable means. In a preferred embodiment, gas may be drawn into and directed to the heater by an air regulator. Chemical agent may be drawn or otherwise directed into the mixing means by a pump.

The chemical agent may be any chemical composition suitable for use as a fumigant and may be provided to the apparatus as a liquid. Advantageously, the vaporising apparatus can be used with a range of chemical agents. The gas is preferably an inert gas.

Advantageously, vaporisation of the chemical agent by contacting with a hot inert gas stream substantially reduces exposure to oxygen and mitigates flammability risk. This is particularly useful if the chemical agent has known flammability properties. Further, vaporisation of the chemical agent is substantially complete, minimising residue of unvaporised chemical agent in the apparatus, treatment area and on materials located in the treatment area..

Advantageously, the vaporising apparatus is not limited by a batch or fixed volume of gas or chemical agent, enabling a substantially continuous flow of non-flammable fumigant agent to be provided to a treatment area and/or until completion of fumigation treatment.

The heater is provided to heat the gas stream to a predetermined temperature, this temperature being determined at least in part with reference to the composition of the chemical agent and/or composition of the gas. Desirably, the heater may be in communication with a control means to control function of the heater and maintain temperature at a level required to create a hot gas stream of predetermined temperature.

The hot gas stream is split into a first hot gas stream and a second hot gas stream as the hot gas stream is directed to the mixing chamber. The first hot gas stream enters the mixing chamber at a first chamber entrance and the second hot gas stream enters the mixing chamber at a second chamber entrance. The first and second hot gas streams may enter the mixing chamberin different directions relative to each other.

The mixing means is a mixing chamber. The chemical agent stream enters the mixing chamber at the first chamber entrance via a nozzle. The nozzle may cause the chemical agent to substantially atomise upon entry to the mixing chamber, such that the chemical agent stream entering the mixing chamber is a particle stream. Advantageously, atomisation of the chemical agent stream aids in the vaporisation process, as the particles in the particle stream can be vaporised substantially instantaneously upon contact with the hot gas stream.

Vaporisation of the chemical agent stream commences with contacting of the chemical agent particle stream with the first hot gas stream. The second hot gas stream may contact the resulting vaporised chemical agent, forming a gas/agent mixture. The gas/agent mixture may be directed outwardly of the mixing chamber at least in part by the direction of flow of the second hot gas stream. Vaporised gas/agent mixture or fumigant may be expelled from the mixing chamber through an outlet and onto or into an area, volume or surface requiring treatment.

Advantageously, the vaporising apparatus of the present disclosure can be portable and enables onsite generation and application of a vaporised fumigant.

In an example of a vaporizing apparatus not in accordance with the present invention, the vaporising apparatus may be mountable on a back- pack structure, enabling an operator to wear functional components of the apparatus. In this embodiment, the mixing means may be an atomising nozzle, to which separate lines of gas and chemical agent are directed.

Further, the vaporising apparatus is not constrained by limited sources of gas or chemical agent, both in terms of type of gas and/or agent nor by volume. Advantageously, this provides the vaporising apparatus with flexibility and versatility to serve in a wide and diverse range of treatment applications, including but not limitedto fumigation or disinfestation treatment of buildings and containers, sealed and semi-sealed chambers, various equipment and materials, soil, agricultural/horticultural produce and various surfaces.

Thus, according to a further aspect, there is provided a method of treatment by fumigation, comprising heating a gas stream to provide a hot gas stream and contacting the hot gas stream with a chemical agent stream, wherein at least part of the chemical agent stream is vaporised, whereby the vaporised chemical agent is applied to an area requiring treatment.

In a preferred embodiment, the vaporised chemical agent is mixed with hot gas stream to form a gas/agent mixture and the gas/agent mixture is applied to the area requiring treatment.

The present disclosure advantageously provides fumigation and disinfestation capability efficiently and conveniently whilst simultaneously mitigating health and safety concerns, including those related to flammability and handling of chemical agents.

### Brief Description of Drawings

In order for the present disclosure to be more readily understood, embodiments will now be described, by way of example, with reference to the accompanying drawings in which:
Figure 1 is an upper perspective view of a vaporising apparatus according to a first embodiment;
Figure 2 is a perspective view of components inside the vaporising apparatus of Figure 1;
Figure 3 is a perspective view of flow components of the vaporising apparatus of Figures 1 and 2;
Figure 4 is a schematic of the vaporising apparatus of Figures 1 to 3; and
Figure 5 is a schematic of a vaporising apparatus according to an embodiment not according to the present invention.

### Description of Embodiments

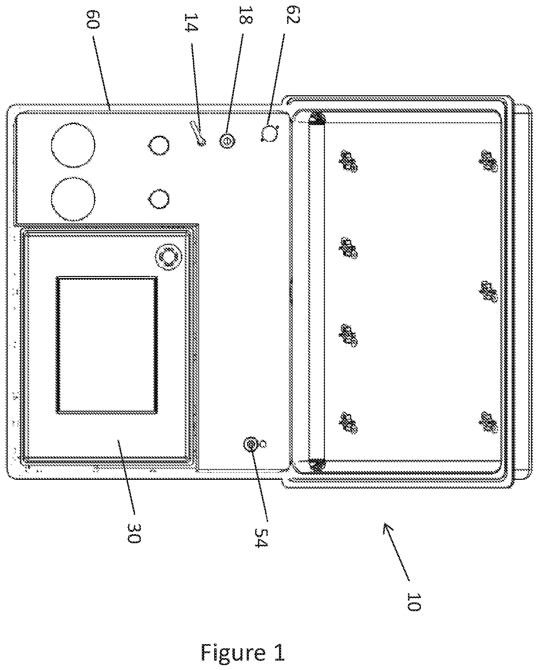

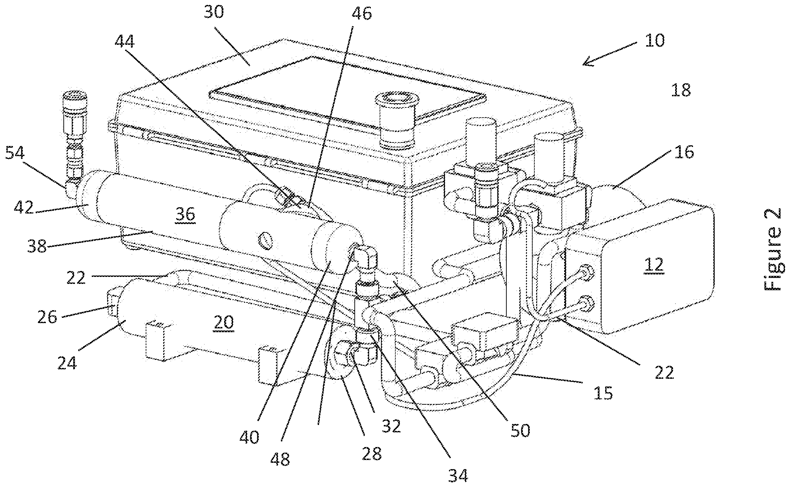

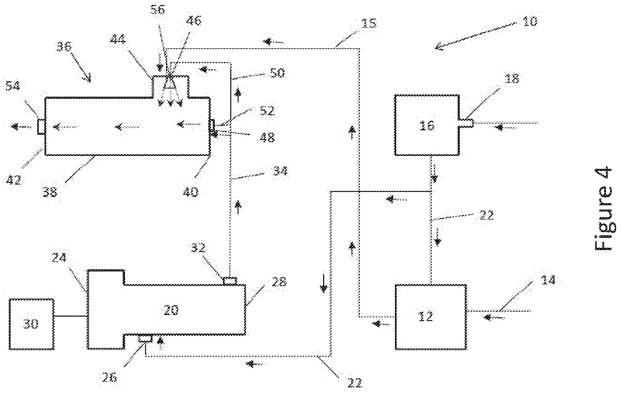

Referring initially to Figures 1 to 4, there is shown a first embodiment of a vaporising apparatus 10 for use in vaporising a chemical agent, typically a liquid chemical agent, for application as a fumigant. The described vaporising apparatus 10 has particular utility in vaporisation of chemical agents having properties, such as flammability, which would otherwise render the chemical agent unsuitable or undesirable for use as a fumigant. However, the vaporising apparatus 10 has utility in vaporisation of any chemical agent which is desired to be used as a fumigant, including but not limited to, ethyl formate, methyl bromide, 1,3-dichloropropene, chloropicrin and propylene oxide.

The vaporising apparatus 10 includes a pump 12 which is placed in fluid communication with a source of chemical agent (not shown) via a first conduit 14. The source of chemical agent is external to and separate from the apparatus 10, enabling the apparatus 10 to draw, channel and utilise chemical agent from any source or any sized vessel, providing a substantially non-limiting source of chemical agent to the apparatus 10. This provides a significant advantage over prior art vaporising devices, in which volume of chemical agent and hence extent of application of the vaporising device is limited by the volume of a vessel, canister or other such chamber that forms part of the device itself. Maintaining the source of chemical agent separate from the apparatus 10 also provides safety advantages whereby little chemical agent remains in the apparatus 10 after use, mitigating toxicity and/or flammability risk.

Some known vaporisation devices require an operator to measure and introduce a fixed amount of chemical agent into a vessel of the device prior to each use, requiring handline of the chemical agent and increasing risk of exposure to a potentially toxic substance. This risk is reduced by the present apparatus 10, as the operator is not required to measure out and introduce a fixed amount of chemical agent. These known vaporisation devices typically conduct heating of the chemical agent in the vessel. If the vessel is not permitted to adequately cool in between applications of chemical agent, introduction of chemical agent into the vessel will cause the agent to evaporate on contact with hot elements in the vessel. Thus, once the device is depleted of the fixed amount of chemical agent, it must be stopped and cooled before it can be filled again. The present apparatus 10 avoids the need to provide a cooling period between respective applications of chemical agent and thereby enables enhanced operational efficiency.

The first conduit 14 is of appropriate length and composition to transport chemical agent from the liquid agent source and into the apparatus 10 via action of the pump 12. The first conduit 14 is desirably composed of a material capable of transporting chemical agents such as organic solvents without significant degradation, such as silicone, polyethylene, fluorinated ethylene-propylene or teflon.

The pump 12 operates to draw and direct chemical agent into the apparatus 10. In one embodiment, the pump 12 may be an air-operated diaphragm pump, which may be powered by compressed air, nitrogen or other suitable gas, desirably an inert gas, from a gas source (not shown). The gas source is located externally to the apparatus 10. An air-operated pump provides an advantageous safety mechanism, whereby operation of the pump 12 ceases upon interruption or cessation of flow of the inert gas source, simultaneously stopping pumping of chemical agent into the apparatus 10.

The pump 12 is in fluid communication with a mixing means, which in this embodiment, is a mixing chamber 36. Liquid chemical agent is directed from the pump 12 to the mixing chamber 36 via a second conduit 15, which may be comprised of the same material as the first conduit 14. A metring means (not shown) can control flow rate of chemical agent into the mixing chamber 36, assisting in controlling dosage rate of chemical agent in fumigation treatment. Flow rate may be selected for a particular treatment application at least in part with reference to the type of chemical agent used in that treatment application and/or to the nature of the treatment application.

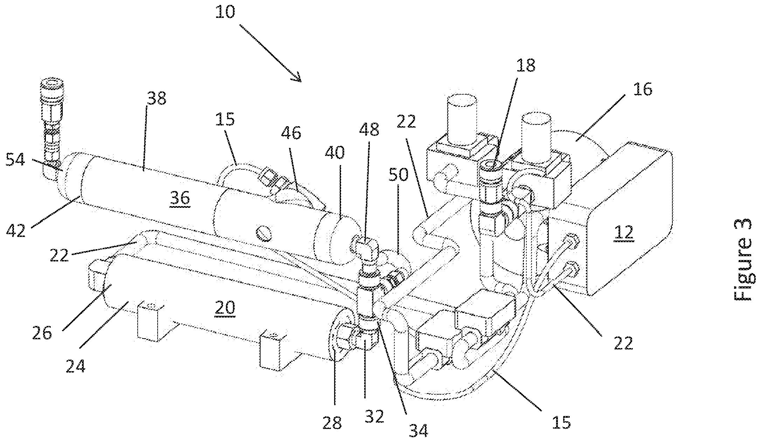

In the embodiment as shown in Figures 1 and 3, the mixing chamber 36 comprises an elongate body 38 having a first end 40 and a second end 42. The mixing chamber 36 also has a neck portion 44, extending outwardly and substantially perpendicularly from the body portion 38 adjacent the first end 40 thereof. The neck portion 44 provides an area for clearance of incoming gas/chemical agent streams and desirably extends outwardly from the body portion 38 a distance that can accommodate an anticipated size of said streams. The mixing chamber 36 may be composed from any suitable material, such as stainless steel.

The second conduit 15 connects the pump 12 to the mixing chamber 36, transporting chemical agent and introducing it into the mixing chamber 36 via a first chamber entrance 46 located at the neck portion 44. In the embodiment shown in Figures 1 and 3, the first chamber entrance 46 is located at a top of the neck portion 44. The first chamber entrance 46 is provided with a nozzle 56, preferably an air atomising or direct pressure nozzle. A stream of chemical agent enters the mixing chamber 36 through the nozzle 56, causing the chemical agent to break up or atomise upon entry into the mixing chamber 36, such that a stream of fine particles enter the neck portion 44 of the mixing chamber 36. The particles typically have a diameter of about 50-150µm. Particle size may vary depending on parameters such as liquid and/or gas pressure and nozzle diameter.. The stream of particles is sprayed into the neck portion 44 of the mixing chamber 36 and towards the elongate body 38.

The apparatus 10 further includes an air regulator 16 in fluid communication with the gas source via inlet 18. The air regulator 16 controls pressure of the gas, which may be at about 2 bar or more to provide a steady flow rate of gas to the apparatus 10.

The gas source is preferably a source of an inert gas, including one or more of nitrogen, carbon dioxide, helium or air. The gas source can be provided in a container or tank suitable for storing compressed gas, such as a cylinder, such a container having a volume that provides sufficient amount of gas for at least one treatment application of chemical agent as a fumigant. Alternatively, the gas source is a gas generator, able to generate sufficient quantity of inert gas as necessary by extracting it from the atmosphere. Non-limiting examples are pressure swing adsorption (PSA) or membrane separation (MS) nitrogen generators. In one embodiment, the gas source is a nitrogen generator, capable of producing high quality (>99%) nitrogen gas. The nitrogen generator provides dried, filtered and heated air though a bank of specially designed filtering membranes. These membranes separate the nitrogen from CO₂ and O₂ exhaust gas and pass the nitrogen to a delivery pipe or other suitable conduit, for delivery to the inlet 18 of the air regulator and to the apparatus 10.

The air regulator 16 is in fluid communication with a heater 20 and also with the pump 12 via a first gas conduit 22. The air regulator 16 enables gas to be directed from the air regulator 16 to the heater 20 and to the pump 12. The first gas conduit 22 extends from the air regulator 16 as a single conduit and splits into two to deliver gas to both pump 12 and heater 20. The portion of first gas conduit 22 directing to the pump 12 may be fitted with an in-line adjustable valve to regulate pressure of incoming chemical agent. Gas enters the heater 20 at or adjacent to a first end 24 through heater inlet 26.

In the embodiment shown in Figures 1 and 3, the heater 20 is an inline air heater. Ideally, the heater 20 is designed for substantial air flow and rapid heating of air or gas introduced into the heater 20. It is also preferred that the heater 20 is capable of heating gas introduced into the heater 20 to significant temperatures whilst maintaining substantially ambient temperature on an exterior of the heater 20. The heater 20 is powered from a power source (not shown), such as a single phase power source.

The heater 20 is programmable to a desired temperature by a control means 30. The control means 30 may be a programmable logic controller (PLC). The control means 30 controls both the on/off function of the heater 20 as well as managing temperature. Temperature is managed at least in part with reference to the specific chemical agent used in any particular fumigation treatment process. For example, if the chemical agent is ethyl formate, the heater 20 is programmed to heat to a temperature of about 180°C to about 250°C, or up to about 300°C if it is required to boost the flow rate of vaporised chemical agent into a treatment area. The higher the boiling point of the chemical agent, the more energy that is required to vaporise the chemical agent. Ethyl formate has the highest boiling point of the most commonly used commercially available chemical agents used in fumigation. The apparatus 10 can therefore be used to vaporise other chemical agents with lower boiling points such as, but not limited to, methyl bromide and propylene oxide. The apparatus 10 can be used to vaporise a variety of chemical agents, including flammable and non-flammable chemical agents, by appropriately adjusting and controlling the temperature of the heater 20 in use.

Gas enters the heater 20 at or adjacent the first end 24, is heated to the desired temperature inside the heater 20 and exits at or adjacent a second and opposite end 28 through heater outlet 32. Gas flows in and out of the heater 20 at a pressure in the range of between about 1-8 Bar. Typical fumigation applications require a rate of between about 2-3 Bar, but this can be varied depending on the volume of the treatment area and the desired rate of application of fumigant. The outlet 32 is in fluid communication with a second gas conduit 34, which may be insulated and extends towards and transports hot gas to the mixing chamber 36.

As the second gas conduit 34 approaches the mixing chamber 36, the conduit 34 splits into two separate channels, splitting the hot gas stream into a first hot gas stream 50 and a second hot gas stream 52. The first hot gas stream 50 is directed into the mixing chamber 36 at a first chamber entrance 46, located at the neck portion 44..

The second hot gas stream 52 enters the mixing chamber 36 via a second chamber entrance 48 located at or adjacent to the first end 40 of the mixing chamber 36. In this arrangement, the second hot gas stream 52 may be directed into the mixing chamber 36 in a direction which is different to the direction of entry of the first hot gas stream 50. In the embodiment shown in the Figures, the second hot gas stream 52 is directed into the mixing chamber 36 substantially perpendicularly to the direction of entry of the first hot gas stream 50.

The first hot gas stream 50 may enter the mixing chamber 36 via or adjacent to the nozzle 56 through which the chemical agent stream is introduced into the mixing chamber 36, entering as a chemical agent particle stream. The first hot gas stream 50 thus contacts the chemical agent particle stream in the neck portion 44 of the mixing chamber 36, commencing vaporisation of the chemical agent stream. Advantageously, the atomisation of the agent via nozzle 56 prior to entry to the neck portion 44 and contacting with the first hot gas stream 50 aids in the vaporisation process, whereupon vaporisation of chemical agent particles is essentially instantaneous upon contact with the first hot gas stream 50.

Vaporisation of chemical agent thus commences in the neck portion 44 of the mixing chamber 36. Vaporised chemical agent travels towards the elongate body portion 38 where the vaporised chemical agent meets and intersects the second hot gas stream 52, the second hot gas stream 52 incoming into the body portion 38 substantially perpendicularly to the stream of vaporised agent and/or first hot gas stream 50. The second hot gas stream 52 provides a stream of carrier gas, whereby mixing of carrier gas with vaporised chemical agent occurs adjacent the entry point of the second hot gas stream 52 to create a mixture of chemical agent/gas vapour. The flow of second hot gas stream 52 into the mixing chamber 36 may typically be at a pressure of about 2 bar or more, but may be increased to around 6 bar for a large volume treatment application.

The meeting and intersecting of the vaporised chemical agent with the second hot gas stream 52 creates significant turbulence, effectively mixing the vaporised chemical agent with the carrier gas provided by the second hot gas stream 52. This mixing of chemical agent stream and first and second hot gas streams 50, 52 facilitates a rapid phase change of the chemical agent.in both the neck portion 44 and body portion 38 of the mixing chamber 36.

The chemical agent/gas mixture may be directed through the body portion 38 of the mixing chamber 36 and towards the second end 42 thereof by the second hot gas stream 52. Chemical agent/gas mixture exits the mixing chamber 36 through outlet 54. The outlet 54 may have an aperture of sufficient size to maintain adequate pressure to force chemical agent/gas mixture outwardly, towards and into the treatment area and to minimise condensation of chemical agent. The outlet 54 may be connected by suitable means to an insulated delivery tube (not shown) which delivers the chemical agent/gas mixture to the area requiring treatment. The delivery tube is of sufficient length to deliver the chemical agent/gas to the treatment area but is also sufficiently short and has an appropriately sized diameter to avoid any significant cooling and recondensation of vapour as it travels from the outlet 54 to the treatment area.

The above described components of the apparatus 10, in particular the pump 12, air regulator 16, heater 20 and mixing chamber 36 may be retained or otherwise housed in a housing 60. The housing 60 may comprising a frame and cover. In the embodiment shown in Figures 1 to 3, the housing 60 comprises a polymer case. Desirably, the polymer case may be light and resistant to water, crushing and dust. The vaporisation apparatus 10 may thus be presented as a substantially compact and transportable unit. Portability permits the apparatus 10 to be readily moved from one treatment site to another by a single operator. The portable nature and compactness of the vaporisation apparatus 10 enables use in small areas such as small grain silos, as well as in larger areas such as warehouses, buildings and ship holds.

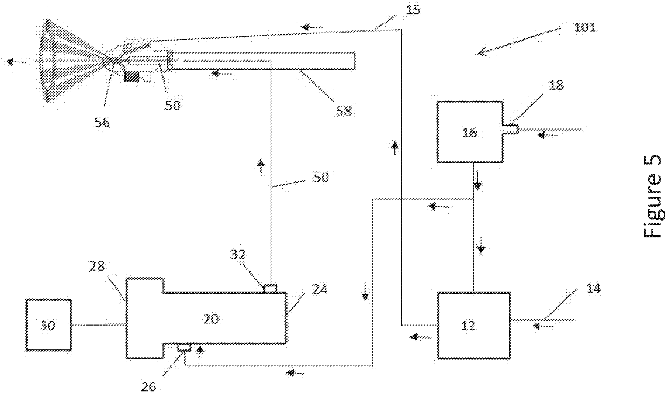

Referring now to Figure 5, there is shown a further embodiment, not in accordance with the invention, where the apparatus 101 is mountable on a back-pack structure, enabling an operator to wear functional components of the apparatus 101 on their back during a fumigation treatment application. In this embodiment, the mixing means is an atomiser nozzle 56. The atomiser nozzle 56 may be located at the end of a lance 58 and operation of the nozzle 56 may be controlled by an actuator (not shown), such as a hand-operated trigger..

In this embodiment, a hot gas stream 50 exits the heater 20 and is directed to the atomizer nozzle 56. The second liquid conduit 15 directs chemical agent towards the atomizer nozzle 56 as a separate stream. Flow of gas stream and chemical agent stream towards and through the nozzle 56 may be initiated by compressing the hand-operated trigger and stopped by releasing the trigger.

An operator directs the nozzle 56 towards an area to be treated, holding the end of the lance 58 and nozzle 56 about 30-60 cm away from the surface to be treated. The hot gas and chemical agent streams meet in the nozzle 56, whereupon the hot gas stream contacts and mixes with the chemical agent stream, partially vaporising the chemical agent and breaking up fluid into fine particles. A mixture of vaporised chemical agent, hot gas and particles of chemical agent exit from the nozzle 56 as a partially vaporised spray.

The combined mixture of gas and chemical agent may thus be applied to the surface as a thin film, giving the surface a damp appearance, but which may be rapidly evaporated from the surface being treated. Surface temperature of the treated surface, raised by application of the hot gas stream, is used to complete evaporation of chemical agent.

Other components of this embodiment are substantially as described above with respect to the first embodiment, with weight of one or more components being minimised as practically possible. The gas and chemical agent sources may remain external to the apparatus 101, with operator movement being limited only by attachment to these sources. Alternatively, the gas and chemical agent sources may be provided in relatively small and contained quantities, such as by attaching a container of gas and/or chemical agent to the apparatus 101, with these sources being connected to components of the apparatus 101 substantially as described above.

This embodiment has particular utility for surface applications, including treatment of empty containers to mitigate risk of pest infestation once a material such as a bulk commodity is introduced into the container.

In use, the source of chemical agent and gas source are each placed locally to the apparatus 10 and area requiring treatment. The gas source and chemical agent source are each connected to the apparatus 10 via air regulator inlet 18 and first liquid conduit 14 respectively. In the event the gas source is a gas generator, such as a nitrogen generator, the gas source is activated until a required gas purity is achieved. When the gas source is nitrogen, it is preferred that >99%, more preferably about >99.4% nitrogen purity is achieved.

Chemical agent may be drawn into the apparatus 10 and directed towards the nozzle 56 at the first chamber entrance 46 of the mixing chamber 36 through the first and second liquid conduits 14, 15 by action of the pump 12. Gas may be channelled from the gas source towards the heater inlet 26 via first gas conduit 22 by the air regulator 16. The heater 20 may be operated by the control means 30 to switch on and heat to a predetermined temperature, the predetermined temperature determined at least in part with reference to the chemical agent being used in the treatment application and/or with respect to the gas source.

Gas is warmed in the heater 20 to the predetermined temperature. Hot gas exits via heater outlet 32 and is directed towards the mixing chamber 36 via the second gas conduit 34, being split into the first and second hot gas streams 50, 52 prior to reaching the mixing chamber 36. The first hot gas stream 50 enters the mixing chamber 36 via first chamber entrance 46, whereupon the first hot gas stream 50 is contacted with the liquid particle stream of chemical agent entering the mixing chamber 36 via the nozzle, vaporising liquid particles.

The vaporised chemical agent particles are then contacted by the second gas stream 52 incoming into the mixing chamber 36. The second hot gas stream 52 mixes with the vaporised chemical agent particles in the mixing chamber, forming a vaporised chemical agent/gas mixture. This vaporised chemical agent/gas mixture is the fumigant that is suitable for application to a treatment area.

The agent/gas mixture is directed towards and out of the mixing chamber outlet 54 by movement of the second hot gas stream 52, acting as a carrier gas, from the first end 40 towards the second end 42 of the mixing chamber 36. Chemical agent/gas mixture is channelled and applied to the treatment area by the insulated delivery tube.

On completion of fumigation treatment to the treatment area, the apparatus 10 may be switched off or powered down, ceasing flow of gas and chemical agent. The apparatus 10 may be used in a further treatment application at any time thereafter, as required.

If a further treatment application requires use of a different chemical agent to the chemical agent used in a prior application, the apparatus 10 may first be flushed to remove residue of the first chemical agent. Advantageously, since chemical agent is not stored in the apparatus 10 and vaporisation of chemical agent is substantially complete in any application, little chemical agent residue remains in the apparatus 10 after use. Flushing or otherwise cleaning of the apparatus 10 to enable a different chemical agent to be used may therefore be as simple as pumping and running a suitable solvent, e.g. water, into the apparatus 10 and through the various components as per standard operating procedure, instead of chemical agent. After a suitable period of flushing with said solvent, the apparatus 10 may then be used with an entirely different chemical agent.

### Examples of operation

### Example 1: Fumigation of Shipping Containers

Using the apparatus 10 of the present disclosure, general purpose standard shipping containers (30-60m³) were treated to achieve a target concentration of 90g/m3 of ethyl formate. A volume of liquid ethyl formate contained in a drum was placed next to the apparatus 10. The first liquid conduit 14 extending from pump 12 was inserted through a lid of the drum to the bottom of the drum. A sediment filter was attached to the end of the first liquid conduit 14 to prevent any particles being drawn into the pump 12.

A nitrogen source was connected to the air regulator 16 via inlet 18 and directed into the heater 20 as a nitrogen gas stream. The outlet 54 of the mixing chamber 36 was connected to a manifold placed between two closed shipping container doors and subsequently to the delivery tube. The manifold was fabricated to direct vaporised ethyl formate into the shipping container.

The vaporising apparatus 10 was activated via control means 30, switching the heater 20 on and setting the heater 20 to heat the nitrogen gas stream to about 200°C. Upon contact of the hot nitrogen gas streams with ethyl formate stream in the mixing chamber 36, the ethyl formate was vaporised and mixed with the hot nitrogen gas to produce an ethyl formate/nitrogen gas mixture.

The ethyl formate and nitrogen gas mixture was applied to the containers at a flow rate of 400mL per minute and at a pressure of 2.5 Bar until the volume of liquid ethyl formate in the drum had been consumed and vaporised by the vaporising apparatus 10 and channelled into the containers. The apparatus 10 was then turned off and the flow of nitrogen gas stopped. The delivery tube was disconnected with the outlet 54 and apparatus 10 and the containers substantially sealed to commence a fumigation exposure period.

### Example 2: Fumigation with methyl bromide and propylene oxide

The apparatus 10 of the present disclosure was operated substantially as described in Example 1, to confirm capability of the apparatus 10 to vaporise a variety of chemical agents and produce a fumigant agent or formulation suitable for application to an area requiring treatment by fumigation.

A volume of liquid methyl bromide (boiling point 3.56°C) was placed in fluid communication with the apparatus 10 via the first liquid conduit 14. The nitrogen source was connected and the apparatus 10 activated as described above, heating the nitrogen gas stream and drawing and directing liquid methyl bromide into the apparatus 10. Upon contact of the hot nitrogen gas stream with methyl bromide stream, the methyl bromide was vaporised and mixed with the hot nitrogen gas to form a non-flammable methyl bromide/nitrogen gas mixture. The resulting gas mixture was suitable for use as a fumigant formulation and was applied at a flow rate of 1 litre/minute.

Following completion of the methyl bromide vaporisation test, the apparatus 10 was flushed of methyl bromide by running the apparatus 10 with a volume of water in place of the methyl bromide.

The apparatus 10 was subsequently placed in fluid communication with a volume of propylene oxide (boiling point 35°C). The nitrogen source was connected and the apparatus 10 activated as previously described. The stream of liquid propylene oxide was contacted with the hot gas stream, vaporised and mixed with the hot nitrogen gas to form a non-flammable propylene oxide/nitrogen gas mixture. The resulting gas mixture was suitable for application as a fumigant formulation and was applied at a flow rate of 0.85 litres/minute.

These trials demonstrate that the apparatus 10 can create a vapour of non-flammable fumigant formulation from a variety of chemical agents. Methyl bromide is one of the most commonly used global agricultural liquid fumigants. Propylene oxide is widely used for dried fruit and nut pasteurisation. Ethyl formate has wide ranging applicability, as described above. The ability to use a range of chemicals with the apparatus 10 advantageously provides a substantially unlimited range of fumigation solutions. The above described trials demonstrate that the apparatus 10 can effectively vaporise ethyl formate and convert it to a non-flammable fumigant formulation. The apparatus 10 can also vaporise other chemical agents with lower boiling points. The apparatus 10 is considered to be capable of vaporising any liquid with a boiling point of about 120°C or less and to create a vapour of non-flammable fumigant from that liquid. The apparatus 10 is also considered to be capable of vaporising liquids with higher boiling points as required, primarily by increasing the temperature of the heater 20 in use.

### Example 3: Surface Treatment of Shipping Containers

Using the back-pack variation of the present invention, general purpose standard shipping containers (30-60m³) were treated with a combined mixture of ethyl formate and nitrogen gas. Nitrogen gas was heated to a temperature of about 180°C to form a stream of hot nitrogen gas. The hot nitrogen gas stream and stream of liquid ethyl formate were directed towards the atomizing nozzle, located in the end of the lance, by compressing the hand-operated trigger located on the lance, which enables the pump to commence flow of each.

The end of the spray lance was held between about 30-60 cm above and directed towards the surface or area to be treated. The combined mixture of hot gas and liquid ethyl formate was applied to the surface as a thin film, giving the appearance of a damp surface and rapidly evaporated from the surface shortly after application. The initial appearance of a damp surface provided an indicator to the operator of which sections of the surface had already been treated.

The mixture of gas and ethyl formate was applied at a flow rate of 400mL per minute and at a pressure of 2.5 Bar and achieved a target concentration of 90g/m3 ethyl formate.

### Example 4: Monitoring Ethyl Formate Concentration in Shipping Containers

A trial of the apparatus of the present disclosure was conducted using ethyl formate plus high concentration nitrogen gas fumigation in a 20' shipping container, loaded to approximately 80% of capacity. A membrane separation nitrogen generator was used for the on-site production of 99% pure nitrogen.

Three monitoring lines were placed inside the shipping container prior to commencement of the trial. The monitoring lines enabled gas samples to be drawn from the container via a pump attached to a gas detection device. In this trial, a G460 gas detection device fitted with a specific sensor for measuring ethyl formate at concentrations between 0-5% vol were used. Monitoring lines were placed at (i) rear floor; (ii) centre middle; and (iii) front headspace of the shipping container. A specialised application manifold was fitted between doors of the shipping container to facilitate application of ethyl formate vapour generated by the apparatus to be applied to the interior of the container.

A volume of three litres of 99% pure, food-grade ethyl formate was used for the trial. This volume of ethyl formate was vaporised by the apparatus, as per described above. The time taken to vaporise and apply the three litres of ethyl formate was 40 minutes, including heater warm up period. Upon completion of the application process, an initial set of gas concentration readings were taken. In these initial readings, at all three test locations, levels of ethyl formate close to 5% vol or 50,000 ppm were observed, noting that the measurement range of the G460 gas detection device is 0-5% vol. These initial measurements indicated uniform distribution of ethyl formate vapour throughout the container.

After a 5-hour exposure period, a second set of gas concentration readings were taken. These measurements were also observed to be close to the maximum range of the gas detection device. The monitoring lines were removed shortly after this reading to protect the ethyl formate cell within the monitor from over saturation, as the readings were close to 5%.

The following graph illustrates the change in ethyl formate concentration measurements at each of the monitoring sites from completion of application (0 hours) to 5 hours post application.

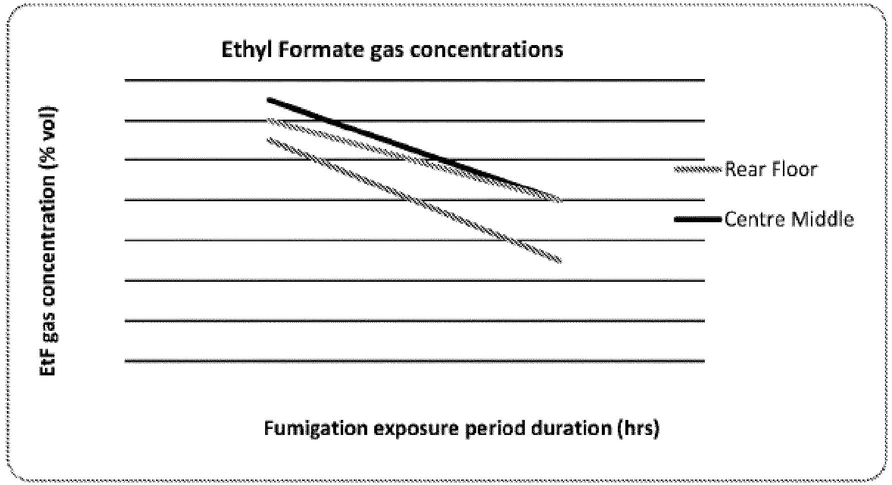

## Claims

1. A vaporising apparatus (10), comprising:
an air or gas operated pump (12) that is configured to be in fluid communication with a source of a chemical agent via a first conduit (14);
a mixing chamber (36), wherein:
the pump (12) is in fluid communication with the mixing chamber (36) via a second conduit (15);
the mixing chamber (36) comprises:
an elongate body portion (38) comprising:
a first end (40); and
a second end (42); and
a neck portion (44) extending outwardly and substantially perpendicularly from the elongate body portion (38) adjacent to the first end (40) thereof; and
the second conduit (15) is configured to enable transport of the chemical agent into the mixing chamber (36) via a first chamber entrance (46) located at the neck portion (44);
the first chamber entrance (46) comprises a nozzle (56) that is configured to atomize the chemical agent prior to entry to the neck portion (44); and
a heater (20) that is configured to:
be in fluid communication with a gas stream; and
to heat gas to produce a hot gas stream;
wherein:
the heater (20) comprises an outlet (32) in fluid communication with a second gas conduit (34), the second gas conduit (34) separating into two separate channels to split the hot gas stream into a first hot gas stream (50) and a second hot gas stream (52);
the first hot gas stream (50) is directed into the mixing chamber (36) at the first chamber entrance (46);
the second hot gas stream (52) enters the mixing chamber (36) via a second chamber entrance (48) located at or adjacent to the first end (40) of the mixing chamber (36);
the first hot gas stream (50) contacts the chemical agent in the neck portion (44) of the mixing chamber (36), vaporising at least part of the chemical agent to form a vaporized chemical agent; and
the vaporized chemical agent travels towards the elongate body portion (38) to meet and intersect the second hot gas stream (52).

2. The vaporising apparatus (10) of claim 1, wherein the hot gas stream and the chemical agent are mixed to provide a substantially non-flammable fumigant agent.

3. The vaporising apparatus (10) of claim 1 or 2, wherein the gas stream and/or the chemical agent originate from a source external to the vaporising apparatus (10).

4. The vaporising apparatus (10) of any one of the preceding claims, further comprising:
an air regulator (16); and
a first gas conduit (22) that extends from the air regulator (16) as a single conduit and splits into two to deliver gas to both the pump (12) and the heater (20).

5. The vaporising apparatus (10) of claim 4, wherein a portion of the first gas conduit (22) directing to the pump (12) is fitted with an in-line adjustable valve configured to regulate pressure of incoming chemical agent.

6. The vaporising apparatus of any one of the preceding claims, wherein the heater (20) is configured to heat the gas stream to a predetermined temperature, the predetermined temperature being determined at least in part with reference to a composition of the chemical agent and/or a composition of the gas stream.

7. The vaporising apparatus (10) of any one of the preceding claims, wherein the first hot gas stream (50) enters the mixing chamber (36) in a first direction and the second hot gas stream (52) enters the mixing chamber (36) in a second direction.

8. The vaporising apparatus (10) of claim 7, wherein the first direction and the second direction are substantially perpendicular to each other.

9. The vaporising apparatus (10) of any one of the preceding claims, wherein the chemical agent enters the mixing chamber (36) substantially as a chemical agent particle stream.

10. The vaporising apparatus (10) of any one of the preceding claims, wherein the second hot gas stream (52) contacts the vaporised chemical agent, forming a chemical agent/gas mixture.

11. The vaporising apparatus (10) of claim 10, wherein the chemical agent/gas mixture is directed out of the mixing chamber (36) by a direction of flow of the second hot gas stream (52).

12. The vaporising apparatus (10) of any one of the preceding claims, wherein the first chamber entrance (46) is located at a top of the neck portion (44).

13. The vaporising apparatus (10) of any one of the preceding claims, wherein the heater (20) is an inline air heater.

14. The vaporising apparatus (10) of any one of the preceding claims, wherein the mixing chamber (36) comprises an outlet (54) that is configured to be connected to an insulated delivery tube.

15. A method of treatment of an area requiring treatment with a fumigant, the method comprising:
vaporising a chemical agent using the vaporising apparatus (10) of any one of the preceding claims; and
applying the vaporised chemical agent to the area requiring treatment.

## Patentansprüche

1. Verdampfungsreinrichtung (10), umfassend:
eine luft- oder gasbetriebene Pumpe (12), welche dazu konfiguriert ist, über eine erste Rohrleitung (14) mit einer Quelle eines chemischen Mittels in Fluidverbindung zu stehen;
eine Mischkammer (36), wobei:
die Pumpe (12) über eine zweite Rohrleitung (15) in Fluidverbindung mit der Mischkammer (36) steht;
die Mischkammer (36) umfasst:
einen länglichen Gehäuseabschnitt (38), umfassend:
ein erstes Ende (40); und
ein zweites Ende (42); und
einen Halsabschnitt (44), welcher sich nach außen und im Wesentlichen quer von dem länglichen Gehäuseabschnitt (38) angrenzend an das erste Ende (40) davon erstreckt; und
die zweite Rohrleitung (15) dazu konfiguriert ist, Transport des chemischen Mittels in die Mischkammer (36) über einen ersten Kammereinlass (46) zu ermöglichen, welcher sich an dem Halsabschnitt (44) befindet;
der erste Kammereinlass (46) eine Düse (56) umfasst, welche dazu konfiguriert ist, das chemische Mittel vor dem Eintritt in den Halsabschnitt (44) zu zerstäuben; und
eine Heizvorrichtung (20), welche konfiguriert ist:
in Fluidverbindung mit einem Gasstrom zu stehen; und
Gas zu erhitzen, um einem Heißgasstrom zu erzeugen;
wobei:
die Heizvorrichtung (20) einen Auslass (32) in Fluidverbindung mit einer zweiten Gasrohrleitung (34) umfasst, wobei sich die zweite Gasrohrleitung (34) in zwei getrennte Kanäle teilt, um den Heißgasstrom in einen ersten Heißgasstrom (50) und einen zweiten Heißgasstrom (52) aufzuteilen;
der erste Heißgasstrom (50) an dem ersten Kammereinlass (46) in die Mischkammer (36) geleitet wird;
der zweite Heißgasstrom (52) in die Mischkammer (36) über einen zweiten Kammereinlass (48) eintritt, welcher sich an dem oder angrenzend an das erste Ende (40) der Mischkammer (36) befindet;
der erste Heißgasstrom (50) in dem Halsabschnitt (44) der Mischkammer (36) in Kontakt mit dem chemischen Mittel kommt, wobei zumindest ein Teil des chemischen Mittels verdampft wird, um ein verdampftes chemisches Mittel zu bilden; und
das verdampfte chemische Mittel sich hin zu dem länglichen Gehäuseabschnitt (38) bewegt, um auf den zweiten Heißgasstrom (52) zu treffen und diesen zu kreuzen.

2. Verdampfungsreinrichtung (10) nach Anspruch 1, wobei der Heißgasstrom und das chemische Mittel gemischt werden, um ein im Wesentlichen nicht entflammbares Räuchermittel bereitzustellen.

3. Verdampfungsreinrichtung (10) nach Anspruch 1 oder 2, wobei der Gasstrom und/oder das chemische Mittel aus einer Quelle außerhalb der Verdampfungsreinrichtung (10) stammen.

4. Verdampfungsreinrichtung (10) nach einem der vorstehenden Ansprüche, weiter umfassend:
einen Luftregler (16); und
eine erste Gasrohrleitung (22), welche sich von dem Luftregler (16) als eine einzelne Rohrleitung erstreckt und in zwei teilt, um Gas sowohl an die Pumpe (12) als auch die Heizvorrichtung (20) zu liefern.

5. Verdampfungsreinrichtung (10) nach Anspruch 4, wobei ein Abschnitt der ersten Gasrohrleitung (22), welche zu der Pumpe (12) führt, mit einem eingebauten einstellbaren Ventil ausgestattet ist, welches dazu konfiguriert ist, Druck von ankommendem chemischem Mittel zu regeln.

6. Verdampfungsreinrichtung nach einem der vorstehenden Ansprüche, wobei die Heizvorrichtung (20) dazu konfiguriert ist, den Gasstrom auf eine vorbestimmte Temperatur zu erhitzen, wobei die vorbestimmte Temperatur zumindest teilweise in Bezug auf eine Zusammensetzung des chemischen Mittels und/oder eine Zusammensetzung des Gasstroms bestimmt wird.

7. Verdampfungsreinrichtung (10) nach einem der vorstehenden Ansprüche, wobei der erste Heißgasstrom (50) in einer ersten Richtung in die Mischkammer (36) eintritt, und der zweite Heißgasstrom (52) in einer zweiten Richtung in die Mischkammer (36) eintritt.

8. Verdampfungsreinrichtung (10) nach Anspruch 7, wobei der erste Richtung und die zweite Richtung im Wesentlichen quer zueinander sind.

9. Verdampfungsreinrichtung (10) nach einem der vorstehenden Ansprüche, wobei das chemische Mittel im Wesentlichen als ein Partikelstrom des chemischen Mittels in die Mischkammer (36) eintritt.

10. Verdampfungsreinrichtung (10) nach einem der vorstehenden Ansprüche, wobei der zweite Heißgasstrom (52) mit dem verdampften chemische Mittel in Kontakt kommt, wodurch eine Mischung aus chemischem Mittel und Gas gebildet wird.

11. Verdampfungsreinrichtung (10) nach Anspruch 10, wobei die Mischung aus chemischem Mittel und Gas durch eine Strömungsrichtung des zweiten Heißgasstroms (52) aus der Mischkammer (36) geleitet wird.

12. Verdampfungsreinrichtung (10) nach einem der vorstehenden Ansprüche, wobei der erste Kammereinlass (46) sich an einer Oberseite des Halsabschnitts (44) befindet.

13. Verdampfungsreinrichtung (10) nach einem der vorstehenden Ansprüche, wobei die Heizvorrichtung (20) ein Inline-Lufterhitzer ist.

14. Verdampfungsreinrichtung (10) nach einem der vorstehenden Ansprüche, wobei die Mischkammer (36) einen Auslass (54) umfasst, welcher dazu konfiguriert ist, mit einem isolierten Zuleitungsrohr verbunden zu werden.

15. Verfahren zur Behandlung eines Bereichs, welcher Behandlung mit einem Räuchermittel erfordert, wobei das Verfahren umfasst:
Verdampfen eines chemischen Mittels unter Verwendung der Verdampfungsreinrichtung (10) nach einem der vorstehenden Ansprüche; und
Anwenden des verdampften chemischen Mittels in dem Bereich, welcher Behandlung erfordert.

## Revendications

1. Appareil de vaporisation (10), comprenant :
une pompe à commande pneumatique ou à gaz (12) qui est configurée pour être en communication fluidique avec une source d'un agent chimique par l'intermédiaire d'un premier conduit (14) ;
une chambre de mélange (36), dans lequel :
la pompe (12) est en communication fluidique avec la chambre de mélange (36) par l'intermédiaire d'un second conduit (15) ;
la chambre de mélange (36) comprend :
une partie corps allongé (38) comprenant :
une première extrémité (40) ; et
une seconde extrémité (42) ; et
une partie col (44) s'étendant vers l'extérieur et sensiblement perpendiculairement à la partie corps allongé (38) à proximité de la première extrémité (40) de celle-ci ; et
le second conduit (15) est configuré pour permettre le transport de l'agent chimique dans la chambre de mélange (36) par l'intermédiaire d'une première entrée de chambre (46) située au niveau de la partie col (44) ;
la première entrée de chambre (46) comprend une buse (56) qui est configurée pour atomiser l'agent chimique avant l'entrée dans la partie col (44) ; et
un dispositif de chauffage (20) qui est configuré pour :
être en communication fluidique avec un flux de gaz ; et
chauffer le gaz pour produire un flux de gaz chaud ;
dans lequel :
le dispositif de chauffage (20) comprend une sortie (32) en communication fluidique avec un second conduit de gaz (34), le second conduit de gaz (34) se séparant en deux canaux séparés pour diviser le flux de gaz chaud en un premier flux de gaz chaud (50) et un second flux de gaz chaud (52) ;
le premier flux de gaz chaud (50) est dirigé dans la chambre de mélange (36) au niveau de la première entrée de chambre (46) ;
le second flux de gaz chaud (52) entre dans la chambre de mélange (36) par l'intermédiaire d'une seconde entrée de chambre (48) située au niveau ou à proximité de la première extrémité (40) de la chambre de mélange (36) ;
le premier flux de gaz chaud (50) entre en contact avec l'agent chimique dans la partie col (44) de la chambre de mélange (36), en vaporisant au moins une partie de l'agent chimique pour former un agent chimique vaporisé ; et
l'agent chimique vaporisé se déplace vers la partie corps allongé (38) pour rencontrer et croiser le second flux de gaz chaud (52).

2. Appareil de vaporisation (10) selon la revendication 1, dans lequel le flux de gaz chaud et l'agent chimique sont mélangés pour fournir un fumigant sensiblement ininflammable.

3. Appareil de vaporisation (10) selon la revendication 1 ou la revendication 2, dans lequel le flux de gaz et/ou l'agent chimique proviennent d'une source externe à l'appareil de vaporisation (10).

4. Appareil de vaporisation (10) selon l'une quelconque des revendications précédentes, comprenant en outre :
un régulateur d'air (16) ; et
un premier conduit de gaz (22) qui s'étend à partir du régulateur d'air (16) en tant que conduit unique et se divise en deux pour distribuer du gaz à la fois à la pompe (12) et au dispositif de chauffage (20).

5. Appareil de vaporisation (10) selon la revendication 4, dans lequel une partie du premier conduit de gaz (22) dirigée vers la pompe (12) est équipée d'une soupape réglable en ligne configurée pour réguler la pression de l'agent chimique entrant.

6. Appareil de vaporisation selon l'une quelconque des revendications précédentes, dans lequel le dispositif de chauffage (20) est configuré pour chauffer le flux de gaz à une température prédéterminée, la température prédéterminée étant déterminée au moins en partie en référence à une composition de l'agent chimique et/ou une composition du flux de gaz.

7. Appareil de vaporisation (10) selon l'une quelconque des revendications précédentes, dans lequel le premier flux de gaz chaud (50) entre dans la chambre de mélange (36) dans une première direction et le second flux de gaz chaud (52) entre dans la chambre de mélange (36) dans une seconde direction.

8. Appareil de vaporisation (10) selon la revendication 7, dans lequel la première direction et la seconde direction sont sensiblement perpendiculaires l'une à l'autre.

9. Appareil de vaporisation (10) selon l'une quelconque des revendications précédentes, dans lequel l'agent chimique entre dans la chambre de mélange (36) sensiblement en tant que flux de particules d'agent chimique.

10. Appareil de vaporisation (10) selon l'une quelconque des revendications précédentes, dans lequel le second flux de gaz chaud (52) entre en contact avec l'agent chimique vaporisé, en formant un mélange agent chimique/gaz.

11. Appareil de vaporisation (10) selon la revendication 10, dans lequel le mélange agent chimique/gaz est dirigé hors de la chambre de mélange (36) par une direction d'écoulement du second flux de gaz chaud (52).

12. Appareil de vaporisation (10) selon l'une quelconque des revendications précédentes, dans lequel la première entrée de chambre (46) est située à un sommet de la partie col (44).

13. Appareil de vaporisation (10) selon l'une quelconque des revendications précédentes, dans lequel le dispositif de chauffage (20) est un dispositif de chauffage d'air en ligne.

14. Appareil de vaporisation (10) selon l'une quelconque des revendications précédentes, dans lequel la chambre de mélange (36) comprend une sortie (54) qui est configurée pour être raccordée à un tube de distribution isolé.

15. Procédé de traitement d'une zone nécessitant un traitement avec un fumigant, le procédé comprenant :
la vaporisation d'un agent chimique à l'aide de l'appareil de vaporisation (10) selon l'une quelconque des revendications précédentes ; et
l'application de l'agent chimique vaporisé à la zone nécessitant un traitement.
